# EUROPÄISCHE PATENTSCHRIFT

(11) **EP 1 516 131 B1**
(45) Veröffentlichungstag und Bekanntmachung des Hinweises auf die Patenterteilung: **29.11.2006**
(21) Anmeldenummer: 03759897.6
(22) Anmeldetag: 23.05.2003
(51) Int. Cl.: F16D 55/227, F16D 65/097

(54) **SCHWIMMSATTEL-SCHEIBENBREMSE**
FLOATING-CALIPER DISK BRAKE
FREIN A DISQUE A ETRIER FLOTTANT

(30) Priorität: 17.06.2002 DE 10227109
(43) Veröffentlichungstag der Anmeldung: 23.03.2005
(73) Patentinhaber: Continental Teves AG & Co. oHG, 60488 Frankfurt am Main (DE)
(72) Erfinder: THIEL, Rudolf, 60488 Frankfurt/M. (DE)
(86) Internationale Anmeldenummer: PCT/EP2003/005405
(87) Internationale Veröffentlichungsnummer: WO 2003/106855

(56) Entgegenhaltungen:
- FR-A- 2 778 438
- GB-A- 2 041 122

## Beschreibung

Die vorliegende Erfindung betrifft eine Schwimmsattel-Scheibenbremse eines Kraftfahrzeugs mit einem fahrzeugfest angeordneten Bremshalter und einem Schwimmsattel, der axial verschiebbar am Bremshalter gelagert ist. Dabei ist der Schwimmsattel häufig mittels zumindest einer Bolzenführung verschiebbar am Bremshalter gelagert.

So ist aus der DE 40 24 484 C2 oder der GB2041122 eine derartige Schwimmsattel-Scheibenbremse mit Bremshalter und Schwimmsattel bekannt, bei der der Schwimmsattel mittels Bolzenführungen axial verschiebbar am Bremshalter gelagert ist. Am Bremshalter sind außerdem die zugehörigen Bremsbeläge axial verschiebbar geführt sowie in Umfangsrichtung abgestützt. Der verschiebbare Schwimmsattel ist mittels einer Gehäusehaltefeder bezogen auf die Bremsscheibenachse in radialer Richtung elastisch gegenüber dem Bremshalter verspannt. Dazu ist die Gehäusehaltefeder einerseits lösbar am Schwimmsattel befestigt und liegt andererseits unter radialer Vorspannung sowie axial verschiebbar am Bremshalter an. Die Gehäusehaltefeder verhindert sowohl ein radiales Ausheben des Schwimmsattels als auch die Entstehung von unerwünschten Klappergeräuschen während des Bremsenbetriebs. Dies macht jedoch vor allem bei Schwimmsätteln mit hohem Gewicht sehr hohe Spannkräfte der Gehäusehaltefeder erforderlich, was nachteilig zu hohen Verschiebekräften des Schwimmsattels gegenüber dem Bremshalter führt. Darüber hinaus unterliegt die Gehäusehaltefeder sehr großen Fertigungstoleranzen, da die Fertigungstoleranzen mehrerer Einzelbauteile der Schwimmsattel-Scheibenbremse für die Federauslegung berücksichtigt werden müssen. Damit erschweren die Fertigungstoleranzen erheblich die exakte Federauslegung, so dass in der Praxis häufig große Schwankungen der Federspannkraft auftreten.

Die DE 100 33 834 A1 beschreibt eine andere Variante einer Teilbelagscheibenbremse mit einem fahrzeugfesten Bremshalter und einem über Bolzenführungen verschiebbar am Bremshalter gelagerten Schwimmsattel. Im Bremshalter sind die zugehörigen Bremsbeläge axial verschiebbar geführt sowie in Umfangsrichtung abgestützt. Zumindest ein Bremsbelag ist dabei mit seitlichen Ansätzen derart formschlüssig im Bremshalter angeordnet, dass er radial innerhalb des Bremshalters fixiert ist. Der Schwimmsattel wiederum ist über einen Bolzen mit diesem radial am Bremshalter fixierten Bremsbelag verbunden, wodurch auch der Schwimmsattel über den Bremsbelag radial am Bremshalter verriegelt ist. Damit wird zunächst ein radiales Ausheben sowohl des Bremsbelags als auch des Schwimmsattels gegenüber dem Bremshalter unterbunden. Allerdings führen die zu berücksichtigenden Fertigungstoleranzen der Einzelbauteile zu einem unerwünscht großen Radialspiel zwischen Bremshalter, Bremsbelag und Schwimmsattels, so dass Klappergeräusche auftreten können.

Ausgehend davon ist es die Aufgabe der Erfindung eine Schwimmsattel-Scheibenbremse mit einem fahrzeugfesten Bremshalter und einem verschiebbaren Schwimmsattel anzugeben, die für unterschiedliche Sattelausführungen eine funktionssichere sowie komfortable verschiebbare Lagerung des Schwimmsattels am Bremshalter gewährleistet.

Gelöst wird diese Aufgabe durch eine Schwimmsattel-Scheibenbremse für Kraftfahrzeuge mit einem Bremshalter und einem Schwimmsattel nach Patentanspruch 1. Danach umfasst die Schwimmsattel-Scheibenbremse einen fahrzeugfest angeordneten Bremshalter, an dem ein Schwimmsattel axial verschiebbar gelagert ist. In diesem Zusammenhang können zwischen Bremshalter und Schwimmsattel insbesondere eine oder mehrere Bolzenführungen angeordnet sein. Zur radialen Fixierung des Schwimmsattels am Bremshalter ist ein Verriegelungselement vorgesehen, das lösbar am Schwimmsattel befestigt ist und mit wenigstens einem Abschnitt axial verschiebbar am Bremshalter angeordnet ist. Das Verriegelungselement ist dabei in seiner radialen Position einstellbar am Schwimmsattel befestigt. Dies ermöglicht, die genaue, an den jeweiligen Anwendungsfall angepasste Einstellung des radialen Spieles zwischen Bremshalter und Schwimmsattel unabhängig von auftretenden Fertigungstoleranzen. Dadurch wird einerseits eine leichtgängige Verschiebbarkeit des Schwimmsattels gegenüber dem Bremshalter gewährleistet und andererseits wird ein unerwünschtes Klappern sowie radiales Ausheben des Schwimmsattels oder der Bremsbeläge aus dem Bremshalter verhindert. Das radial wirksame Verriegelungselement ist insbesondere als im wesentlichen starres Bauteil ausgeführt, z. B. als Blechbauteil, um elastische Verformungen zu reduzieren und somit dem Schwimmsattel nur einen minimalen radialen Bewegungsspielraum zu lassen. Als Folge daraus wird die Entstehung unerwünschter Klappergeräusche bei bestimmten Betriebszuständen der Bremse wirksam unterbunden.

Eine vorteilhafte Ausführung der Schwimmsattel-Scheibenbremse sieht zur radial einstellbaren Befestigung des Verriegelungselements am Schwimmsattel vor, dass das Verriegelungselement über ein radial sich erstreckendes Langloch oder eine sonstige geeignet bemessene Öffnung, z. B. U-förmige Öffnung, Schlitz, große Bohrung etc., mit einem zugehörigen Bolzen am Schwimmsattel befestigt ist. Das Langloch bzw. die Öffnung bildet eine spielbehaftete Aufnahme für den zugehörigen Bolzen, so dass sich ein radialer Einstellbereich bei der Befestigung des Verriegelungselementes ergibt. Damit kann durch abschließende Montage des Verriegelungselementes am Schwimmsattel das radiale Spiel zwischen Bremshalter, Bremsbelag und Schwimmsattel gezielt eingestellt werden. Dabei wird durch radiale Verschiebung des Verriegelungselements das gewünschte radiale Spiel eingestellt und anschließend das Verriegelungselement am Schwimmsattel befestigt. Die eigentliche Befestigung des Verriegelungselements am Schwimmsattel erfolgt über einen Bolzen, der vorzugsweise als Schraube oder sonstiger geeigneter Befestigungsbolzen ausgebildet sein kann und innerhalb einer zugehörigen Bohrung im Schwimmsattel befestigt ist. Das Verrieglungselement wird dabei zwischen Schwimmsattel und Bolzen eingeklemmt und mittels dieser Klemmwirkung in seiner radialen Position am Schwimmsattel fixiert.

Gemäß einer alternativen Variante der Schwimmsattel-Scheibenbremse ist dass das Verriegelungselement an einem fest mit dem Schwimmsattel verbundenen Träger lösbar befestigt ist. Dies reduziert den Bearbeitungsaufwand am Schwimmsattel, da eine Befestigungsbohrung am Schwimmsattel für das Verriegelungselement entfällt. Der Träger ist insbesondere scheibenförmig ausgeführt und innerhalb einer zugehörigen Öffnung im Schwimmsattel fest mit diesem verbunden, beispielsweise mittels einer Pressverbindung. Das Verriegelungselement kann dann wie oben beschrieben über einen Befestigungsbolzen am Träger lösbar befestigt werden.

Eine vorteilhafte Weiterbildung der Schwimmsattel-Scheibenbremse ergibt sich dadurch, dass der axial verschiebbar am Bremshalter angeordnete Abschnitt des Verriegelungselementes radial elastisch ausgebildet ist. Auf diese Art und Weise lässt sich nicht nur das radiale Spiel zwischen Schwimmsattel und Bremshalter gezielt einstellen, vielmehr wird auch eine definierte Einstellung einer radial gerichteten elastischen Vorspannung zwischen Schwimmsattel und Bremshalter ermöglicht.

Eine andere sinnvolle Gestaltung der Schwimmsattel-Scheibenbremse erreicht man dadurch, dass am Verriegelungselement ein elastischer Federarm ausgebildet ist, der mit Vorspannung in Umfangsrichtung, axial verschiebbar am Bremshalter anliegt. Damit wird der Schwimmsattel in Umfangsrichtung elastisch gegenüber dem fahrzeugfesten Bremshalter verspannt. Dies erweist sich vor allem bei bestimmten Einbaupositionen der Schwimmsattel-Scheibenbremse am Fahrzeugrad hinsichtlich der Verhinderung von Klappergeräuschen als günstig. Dabei ist der elastische Federarm entweder einstückig an das Verriegelungselement angeformt oder aber geeignet mit diesem verbunden. Die direkte Anbindung des elastischen Federarms an das Verriegelungselement verringert vorteilhaft den Bauteilaufwand der Schwimmsattel-Scheibenbremse.

Weitere sinnvolle Detailmerkmale der Erfindung sind den Ausführungsbeispielen in den Figuren zu entnehmen und werden im folgenden näher erläutert.

Es zeigt:
- Fig.1: zwei Ansichten einer Schwimmsattel-Scheibenbremse mit einer ersten Variante eines zwischen Schwimmsattel und Bremshalter wirksamen Verriegelungselementes;
- Fig.2: zwei Ansichten des Verriegelungselementes aus Figur 1;
- Fig.3: eine Seitenansicht einer Schwimmsattel-Scheibenbremse mit einer zweiten Variante des Verriegelungselementes;
- Fig.4: eine Seitenansicht einer Schwimmsattel-Scheibenbremse mit einer dritten Variante des Verriegelungselementes;
- Fig.5: eine Seitenansicht einer Schwimmsattel-Scheibenbremse mit einer vierten Variante des Verriegelungselementes;
- Fig.6: eine räumliche Ansicht einer weiteren Schwimmsattel-Scheibenbremsenausführung mit einer fünften Variante des Verriegelungselementes;
- Fig.7: eine Schnittdarstellung durch einen Abschnitt der Schwimmsattel-Scheibenbremse nach Figur 6;
- Fig.8: zwei Ansichten einer weiteren Ausführung der Schwimmsattel-Scheibenbremse mit einer sechsten Variante des Verriegelungselementes.

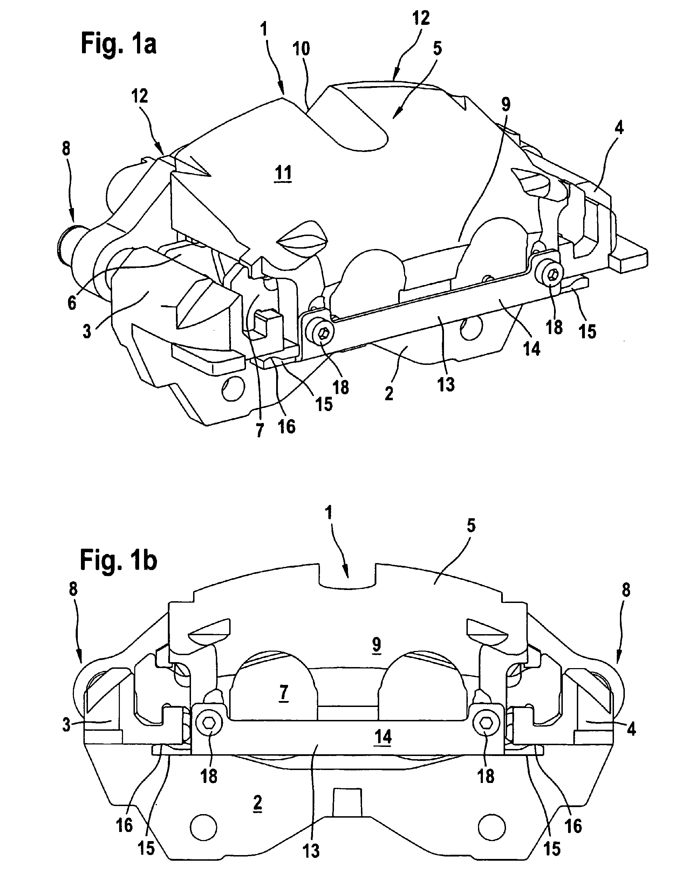

Die in den Figuren 1-5 gezeigte Schwimmsattel-Scheibenbremse 1 für ein Kraftfahrzeug umfasst einen fahrzeugfest angeordneten Bremshalter 2, der entweder direkt in ein fahrzeugfestes Bauteil, beispielsweise einen Achsschenkel, integriert ist oder aber an einem solchen Bauteil montiert ist. Dabei sind den Figuren lediglich Bauformen des Bremshalters 2 zu entnehmen, die sich fahrzeugfest montieren lassen. Der Bremshalter 2 übergreift mit zwei axial sich erstreckenden Halterarmen 3, 4 den Rand einer zugehörigen Bremsscheibe, die aus Gründen der Übersichtlichkeit in allen Figuren jeweils nicht gezeigt ist. In den Halterarmen 3, 4 sind beiderseits der Bremsscheibe angeordnete Bremsbeläge 6, 7, bezogen auf die Bremsscheibenachse, axial verschiebbar geführt sowie in Umfangsrichtung abgestützt, wobei die Bremsbeläge 6, 7 jeweils radial in den Halterarmen 3, 4 anliegen. Die Bremsbeläge 6, 7 zusammen mit der Bremsscheibe übergreift ein Bremssattel 5, der axial verschiebbar am Bremshalter 2 gelagert ist. Dazu sind vorzugsweise zwei Bolzenführungen 8 vorgesehen, die zwischen Schwimmsattel 5 und Bremshalter 2 wirksam sind und die verschiebbare Lagerung des Schwimmsattels 5 ermöglichen. Der Schwimmsattel 5 besitzt zwei zu beiden Seiten der Bremsscheibe verlaufende Sattelschenkel 9, 10 die durch einen die Bremsscheibe übergreifenden Brückenabschnitt 11 miteinander verbunden sind. Dabei sind in den fahrzeugbezogen, axial innenliegenden Sattelschenkel 10 zur Bremsbetätigung zwei Betätigungsvorrichtungen 12 integriert, um den axial innenliegenden Bremsbelag 6 mit einer entsprechenden Bremsenzuspannkraft beaufschlagen zu können. Während einer Bremsbetätigung wird dann durch axiale Verschiebung des Schwimmsattels 5 infolge der Reaktionskraft auch der axial außenliegende Bremsbelag 7 gegen die Bremsscheibe gedrückt. Selbstverständlich ist es ebenso denkbar, nur eine einzige Betätigungsvorrichtung bzw. mehr als zwei Betätigungsvorrichtungen 12 zum Aufbringen der Bremsenzuspannkraft im Schwimmsattel 5 unterzubringen.

Um ein unerwünschtes Entstehen von Klappergeräuschen zwischen dem Bremshalter 2, den Bremsbelägen 6, 7 und dem Schwimmsattel 5 zu verhindern, ist ein Verriegelungselement 13 vorgesehen, das den Schwimmsattel 5 radial gegenüber dem Bremshalter fixiert, wobei die axiale Verschiebbarkeit des Schwimmsattels 5 unbeeinflusst erhalten bleibt. Das Verriegelungselement 13 ist dazu einerseits lösbar am Schwimmsattel 5 befestigt und liegt andererseits axial verschiebbar am Bremshalter 2 an. Als Besonderheit der lösbaren Befestigung ist das Verriegelungselement 13 in seiner bezogen auf die Bremsscheibenachse radialen Position am Schwimmsattel 5 einstellbar angeordnet. Das bedeutet, dass über die radiale Positionierung des Verrieglungselements 13 am Schwimmsattel 5 dessen radiales Spiel gegenüber dem Bremshalter 2 definiert festgelegt werden kann. Damit wird die Leichtgängigkeit der verschiebbaren Schwimmsattellagerung am Bremshalter 2 unabhängig von etwaigen Fertigungstoleranzen erreicht.

Im einzelnen ist das Verriegelungselement 13 in einer ersten Ausführung nach den Figuren 1-2 insbesondere als Winkelschiene ausgebildet, die mit einem Basisabschnitt 14 am axial außenliegenden Schwimmsattelschenkel 9 lösbar befestigt ist und mit seitlichen Armen 15 verschiebbar an den Halterarmen 3, 4 anliegt. Eine solche Winkelschiene wird vorzugsweise aus einem Blechzuschnitt hergestellt, kann aber ebenso auch aus anderen geeigneten Materialien bestehen. Weiterhin ist das Verriegelungselement 13 in den Figuren 1-2 als einteilige Winkelschiene gestaltet. Selbstverständlich ist es analog möglich eine mehrteilige Variante des Verriegelungselementes 13 auszubilden, bei der beispielsweise die Arme 15 als zunächst separate Bauteile mit dem Basisabschnitt 14 verbunden sind. Eine derartige Variante eröffnet die Möglichkeit den Basisabschnitt 14 und die Arme 15 aus unterschiedlichen Werkstoffen auszuführen.

Im fertig montierten Zustand liegen die Arme 15 des am Schwimmsattel 5 befestigten Verriegelungselementes 13 axial verschiebbar an der Unterseite der Halterarme 3, 4 an. Die Arme 15 sind im wesentlichen starr ausgebildet und verhindern damit eine radial gerichtete Bewegung des Schwimmsattels 5 gegenüber dem Bremshalter 2. Zur leichteren Verschiebbarkeit ist an den Armen 15 jeweils eine radiale Erhebung 16 vorgesehen, wodurch die Kontaktfläche zwischen Arm 15 und Halterarm 3, 4 verkleinert wird. Dabei ist das Verriegelungselement 13 grundsätzlich in seiner radialen Position einstellbar am Schwimmsattel 5 lösbar befestigt. Dazu ist im Basisabschnitt 14 zumindest ein radial sich erstreckendes Langloch 17 ausgebildet. Das Verriegelungselement 13 aus den Figuren 1-2 weist sogar zwei Langlöcher 17 auf, durch die sich Befestigungsschrauben 18 erstrecken, welche ihrerseits im axial außenliegenden Schwimmsattelschenkel 9 verschraubt sind. Das Verriegelungselement 13 ist demnach innerhalb der Langlochabmessungen in seiner Position radial einstellbar am Schwimmsattel 5 angeordnet. Dabei wird vor Inbetriebnahme einer derartigen Schwimmsattel-Scheibenbremse 1 zunächst der Schwimmsattel 5 axial verschiebbar am Bremshalter 2 montiert. Anschließend wird das Verriegelungselement 13 in vordefinierter radialer Position am Schwimmsattelschenkel 9 befestigt, indem die Befestigungsschrauben 18 angezogen werden. Zur lösbaren Befestigung des Verriegelungselementes 13 am Schwimmsattel 5 ist neben den gezeigten Befestigungsschrauben 18 auch der Einsatz von sonstigen Befestigungsbolzen oder analog wirkenden Befestigungsmitteln denkbar. Ferner kann das Verriegelungselement auch einseitig am Schwimmsattelschenkel 9 eingehängt sein, während es an der anderen Seite radial einstellbar am Schwimmsattel verschraubt ist. Bei einer solchen Variante ist am Verriegelungselement einseitig vorzugsweise ein Haken ausgebildet, der in eine zugehörige Öffnung im außenliegenden Schwimmsattelschenkel eingehängt werden kann. Auf der gegenüberliegenden Seite des Verriegelungselementes ist ein Langloch ausgebildet, um die radiale Positionierung einstellbar zu gestalten. Die Langlöcher 17 erlauben grundsätzlich die gezielte Einstellung des radialen Spiels zwischen Schwimmsattel 5 und Bremshalter 2. Gegebenfalls kann sich diese radiale Spieleinstellung auch auf einen oder beide Bremsbeläge 6, 7 beziehen, wenn der Schwimmsattel 5 radial über zumindest einen Bremsbeläge 6, 7 am Bremshalter 2 abgestützt ist. Mittels des Verriegelungselementes 13 kann somit das radiale Spiel zwischen Bremshalter 2, den Bremsbelägen 6, 7 und dem Schwimmsattel 5 gezielt festgelegt werden. Dabei können die Fertigungstoleranzen aller zu betrachtenden Einzelbauteile der Schwimmsattel-Scheibenbremse 1 während der radialen Positionierung des Verriegelungselementes 13 ausgeglichen werden. Demzufolge ist es möglich, unabhängig von Fertigungstoleranzen der Einzelbauteile den Schwimmsattel 5 entweder radial spielfrei oder mit definiertem Radialspiel gegenüber dem Bremshalter 2 anzuordnen. Dies verhindert die Entstehung von unerwünschten Klappergeräuschen und verbessert weiterhin allgemein die verschiebbare Lagerung des Schwimmsattels 5 am Bremshalter 2.

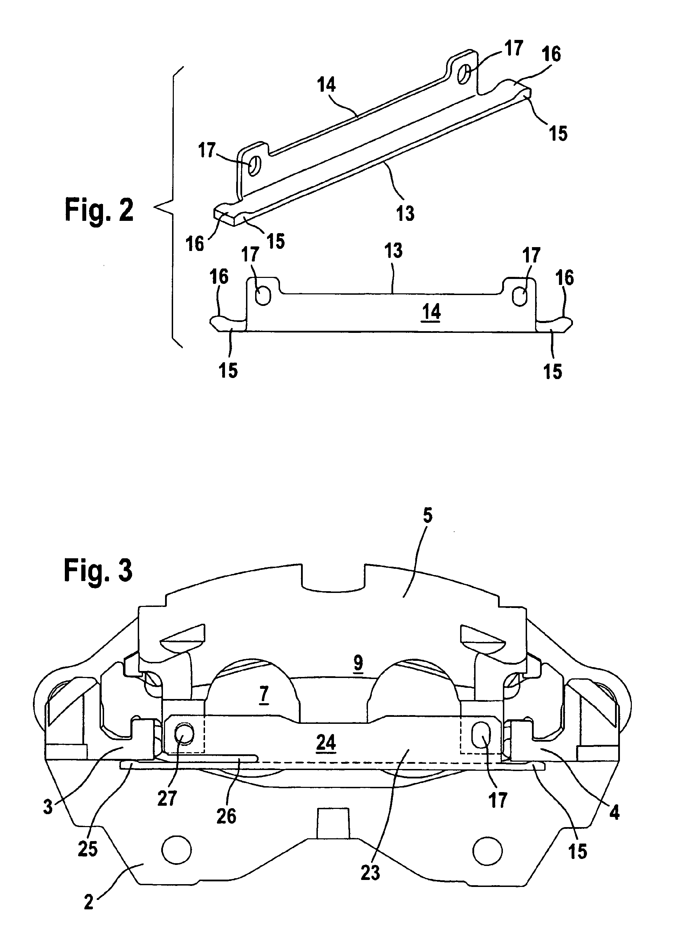

Figur 3 zeigt eine zweite Ausführung des in seiner radialen Position am Schwimmsattelschenkel einstellbar zu befestigenden Verriegelungselementes 23. Im Unterschied zur ersten Variante weist das Verriegelungselement 23 aus Figur 3 einen ersten im wesentlichen starren seitlichen Arm 15 und einen zweiten zumindest in radialer Richtung elastischen Arm 25 auf. Die beiden Arme 15, 25 liegen wie gehabt an der Unterseite der Halterarme 3, 4 axial verschiebbar an. Dabei wird der elastische zweite Arm 25 im wesentlichen dadurch gebildet, dass im Basisabschnitt 24 ein Einschnitt 26 vorgesehen ist. Dies bewirkt eine elastische Verformbarkeit des zweiten Armes 25, so dass das Verriegelungselement 23 mittels dieses Armes 25 eine Federvorspannung in radialer Richtung aufbringen kann. Damit können der Schwimmsattel 5 sowie die Bremsbeläge 6, 7 radial gegenüber dem fahrzeugfesten Bremshalter 2 verspannt werden. Insbesondere kann die radial spielfreie Anordnung von Bremshalter 2 Bremsbelägen 6, 7 und Schwimmsattel 5 gewährleistet werden. Zur radial einstellbaren Befestigung des Verriegelungselementes 23 am Schwimmsattelschenkel 9 ist im Basisabschnitt 24 ein erstes Langloch 17 sowie ein zweites Durchgangsloch 27 vorgesehen. Durch diese Löcher 17, 27 ragen im fertig montierten Zustand zugehörige Befestigungsschrauben oder -bolzen, die im Schwimmsattel 5 lösbar befestigt sind. Dabei kann das Durchgangsloch entweder als kreisrundes Loch oder als Langloch ausgebildet sein. Die Einstellung des radialen Spiels bzw. der Spielfreiheit erfolgt allerdings auf der gegenüberliegenden Seite des Verriegelungselementes 23 am ersten Langloch 17 durch entsprechendes Befestigen des zugehörigen Befestigungsbolzens bzw. der -schraube. Dazu wird das Verrieglungselement 23 unter Ausnutzung der Federwirkung des radial elastischen Armes 25 um das Durchgangsloch 27 verschwenkt und bei Erreichen des gewünschten radialen Spiels über das Langloch 17 am Schwimmsattel 5 befestigt.

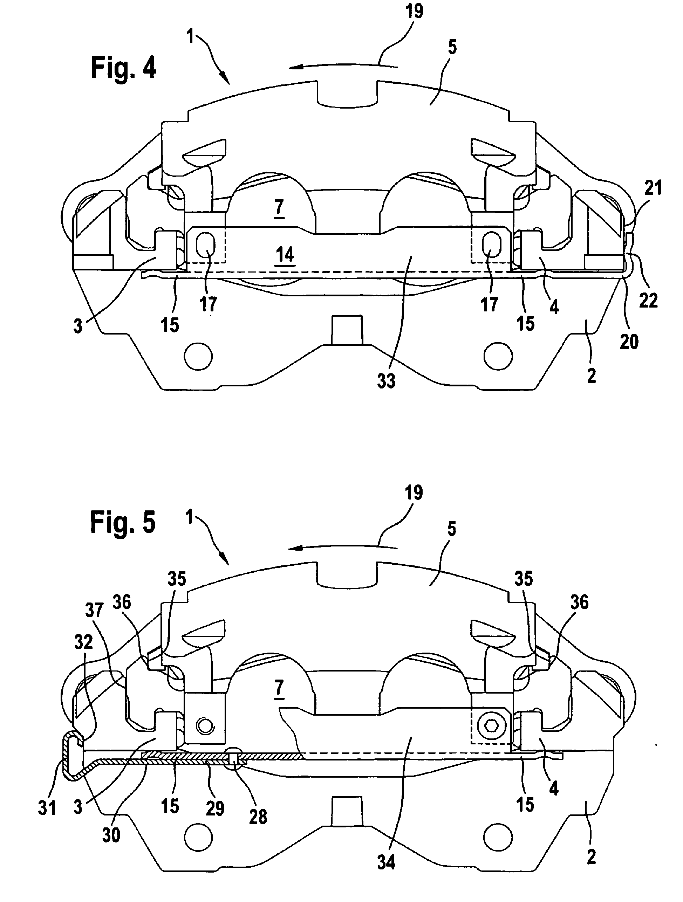

Die Figuren 4 und 5 zeigen weiterentwickelte Ausführungen des Verriegelungselementes 33, 34. Dabei ist das Verriegelungselement 33, 34 wie bereits beschrieben vorzugsweise als Winkelschiene ausgebildet, die in ihrer radialen Position einstellbar am Schwimmsattel 5 befestigt werden kann und mit seitlichen Armen 15 verschiebbar am den Halterarmen 3, 4 des Bremshalters 2 anliegt. Zur lösbaren sowie radial einstellbaren Befestigung des Verriegelungselements 33 am Schwimmsattel 5 sind die bereits genannten Langlöcher 17 im Basisabschnitt 14 vorgesehen. Die generelle Funktion des Verrieglungselementes 33, 34 insbesondere zur definierten Festlegung des radialen Spiels zwischen Bremshalter 2 den Bremsbelägen 6, 7 und dem Schwimmsattel 5 bleibt dabei wie bereits anhand der Figuren 1-3 erläutert erhalten.

Gemäß Figur 4 weist das Verriegelungselement 33 einen einstükkig angeformten Federarm 20 auf, der im dargestellten Ausführungsbeispiel als Verlängerung des Armes 15 gestaltet ist. Der Federarm 20 kann jedoch auch an anderer Stelle mit dem Verriegelungselement 33 verbunden sein. Im einzelnen liegt der Federarm 20 unter Federvorspannung in Umfangsrichtung an einer zugehörigen Kontaktfläche 21 am Halterarm 4 axial verschiebbar an. Dazu ist am Federarm 20 eine Erhebung 22 angeformt, um die Reibwirkung gegenüber der Kontaktfläche 21 zu reduzieren. Durch die Vorspannung des Federarmes 20 wird der Schwimmsattel 5 vorzugsweise zusammen mit den Bremsbelägen 6, 7 in Umfangsrichtung gegenüber dem Bremshalter 2 verspannt. Dies verhindert unerwünschte Klappergeräusche zwischen den einzelnen Bremsenkomponenten, wie sie insbesondere bei ungünstigen Einbausituationen der Schwimmsattel-Scheibenbremse 1 am Fahrzeugrad auftreten können. Nach Figur 4 wirkt der Federarm 20 mit dem bezogen auf die Hauptdrehrichtung 19 der Bremsscheibe, d. h. bei Vorwärtsfahrt, einlaufseitigen Halterarm 4 zusammen. Damit werden der Schwimmsattel 5 und die damit verbundenen Bremsbeläge 6, 7 entgegen der Hauptdrehrichtung 19 mit dem einlaufseitigen Halterarm 4 verspannt. Je nach Einbausituation der Schwimmsattel-Scheibenbremse 1 kann es jedoch auch angezeigt sein den Federarm 20 am gegenüberliegenden Ende des Verriegelungselementes 33 anzuordnen und mit dem auslaufseitigen Halterarm 3 zusammenwirken zu lassen.

Figur 5 zeigt eine weitere gegenüber Figur 4 abgewandelte Ausführung des Verriegelungselementes 34 mit Federarm 30. Der Federarm 30 ist hier als separates Bauteil ausgebildet, das mit seinem Befestigungsabschnitt 29 über ein geeignetes Befestigungsmittel 28, beispielsweise einen Niet, mit dem Verriegelungselement 34 verbunden ist. Dies ermöglicht für den Federarm 30 eine freie sowie gezielte Auslegung hinsichtlich seiner Gestaltung und seiner Materialauswahl. Der Federarm 30 umfasst ferner einen geschwungen geformten Federabschnitt 31, der an einer entsprechend gestalteten Kontaktfläche 32 am Halterarm 3 unter Vorspannung in Umfangsrichtung axial verschiebbar anliegt. Die geschwungene Gestaltung des Federarmes 31 erlaubt die Umsetzung geeigneter Federkennlinien, die die gezielte Festlegung der gewünschten Federvorspannkraft ermöglichen. Im Unterschied zur Variante nach Figur 4 wirkt der Federarm 30 gemäß Figur 5 mit dem bezogen auf die Hauptdrehrichtung auslaufseitigen Halterarm 3 zusammen. Dadurch wird über das am Schwimmsattel 5 befestigte Verriegelungselement 34 der Schwimmsattel 5 zusammen mit den Bremsbelägen 6, 7 in Umfangsrichtung gegenüber dem auslaufseitigen Halterarm 3 verspannt. Im einzelnen wird der Schwimmsattel 5 durch die Federvorspannung des Federarmes 30 mittels einander zugehöriger Anlageflächen 35, 36 über den axial außenliegenden Bremsbelag 7 gegen eine Abstützfläche 37 am auslaufseitigen Halterarm 3 gedrückt. Damit wird ein Klappern der einzelnen Bremsenkomponenten unabhängig von der spezifischen Einbausituation oder bestimmter Betriebsbedingungen wirksam verhindert.

Der in den Figuren 4-5 gezeigte Federarm 20, 30 zur Verspannung des Schwimmsattels 5 sowie der Bremsbeläge 6, 7 gegenüber dem Bremshalter 2 in Umfangsrichtung lässt sich grundsätzlich auch auf andere Ausführungsformen des Schwimmsattels 5 bzw. des Bremshalters 2 übertragen. Wichtig ist, dass der jeweilige Federarm 20, 30 unabhängig von der spezifischen Gestaltung des Schwimmsattels bzw. des Bremshalters eine Federvorspannung in Umfangsrichtung zwischen diesen beiden Bauteilen aufbringen kann.

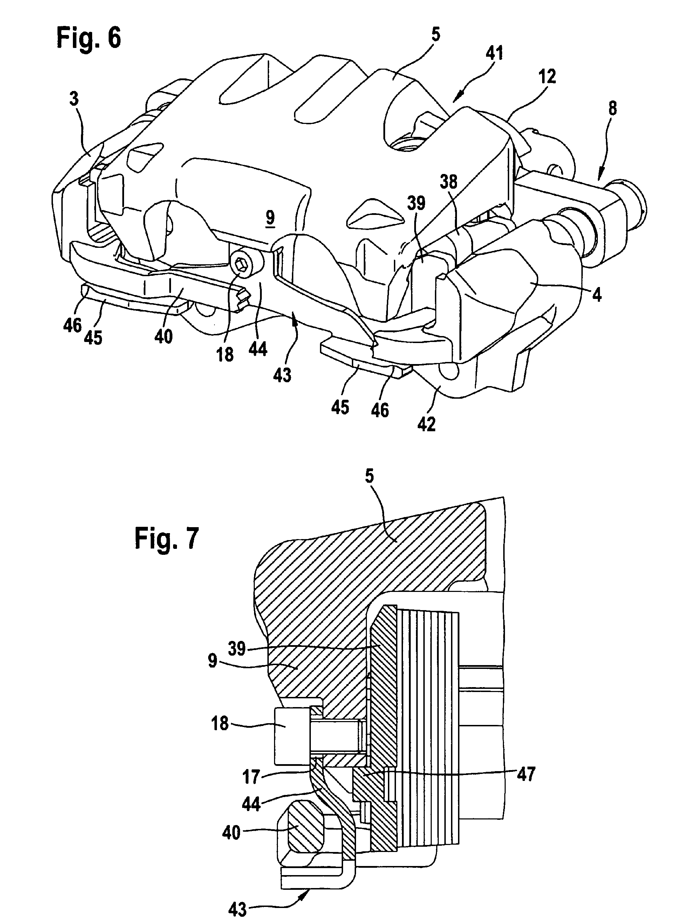

Die Figur 6-7 zeigen eine alternative Variante des Verriegelungselementes 43 für eine modifizierte Bauform der Schwimmsattel-Scheibenbremse 41. Hierbei ist der Schwimmsattel 5 analog über zwei Bolzenführungen 12 verschiebbar am fahrzeugfesten Bremshalter 42 angeordnet. Der Schwimmsattel 5 übergreift in bekannter Weise eine nicht gezeigte Bremsscheibe sowie beiderseits der Bremsscheibe angeordnete Bremsbeläge 38, 39, die in den Halterarmen 3, 4 verschiebbar geführt sowie in Umfangsrichtung abgestützt sind. Allerdings sind die axial sich erstrekkenden Halterarme 3, 4 mittels eines Steges 40 miteinander verbunden. Dies bewirkt eine erhebliche Versteifung des Bremshalters 42, wie sie insbesondere bei sehr leistungsstarken Schwimmsattel-Scheibenbremsen erforderlich wird. Durch den Steg 40 wird die Verformung des Bremshalters 2 bzw. der Halterarme 3, 4 infolge eines anliegenden Bremsmoments reduziert. Das an die Bauform der Schwimmsattel-Scheibenbremse 41 angepasste Verriegelungselement 43 ist an seinem Basisabschnitt 44 mittels einer einzigen Befestigungsschraube 18 oder eines vergleichbaren Befestigungsmittels am axial außenliegenden Schwimmsattelschenkel 9 lösbar befestigt. Die radial einstellbare Positionierung des Verriegelungselements 43 am Schwimmsattel 5 erfolgt wie gehabt über ein Langloch 17 im Basisabschnitt 44. Zur klapperfreien, verschiebbaren Anordnung des Schwimmsattels 5 am Bremshalter 42 sind am Verriegelungselement 43 beidseitig Arme 45 ausgebildet, die verschiebbar an der Unterseite des Stegs 40 anliegen. Dabei ist an jeden Arm 45 jeweils eine Erhebung 46 angeformt, um die Kontaktfläche zum Steg 40 und daraus resultierende Reibungseffekte möglichst klein zu halten. Die Arme 45 gestatten damit erfindungsgemäß eine radial spielfreie Anordnung des Schwimmsattels 5 gegenüber dem Bremshalter 42. Alternativ ist es auch möglich ein definiertes Radialspiel zwischen Bremshalter 42 und Schwimmsattel 5 unabhängig von Fertigungstoleranzen der Einzelbauteile einzustellen. Die gezielte Einstellung des Radialspiels mittels des Verriegelungselements kann sich auch auf die Bremsbeläge 38, 39 bzw. zumindest einen der Bremsbeläge 39 beziehen. Dies ist in Figur 7 veranschaulicht, wo der Schwimmsattel 5 durch Anlage an einem Absatz 47 des außenliegenden Bremsbelags 39 radial an diesem abgestützt ist. Durch die Wirkung des einstellbaren Verriegelungselementes 43 kann somit das Radialspiel zwischen dem fahrzeugfesten Bremshalter 42, zumindest dem außenliegenden Bremsbelag 39 und dem Schwimmsattel 5 definiert festgelegt werden.

Grundsätzlich sind für eine derartige Bauform des Bremshalters 42 mit Steg 40 auch andere Ausführungen des zwischen Bremshalter 42 und Schwimmsattel 5 wirksamen Verriegelungselementes 43 denkbar. Dabei ist es nicht notwendigerweise erforderlich das Verriegelungselement 43 mit zwei seitlichen Armen 45 auszustatten, die am Steg 40 anliegen. Ebenso kann auch nur eine nicht gezeigte Lasche vom Basisabschnitt 44 ausgehen, die den Steg 40 analog umgreift. Auf diesem Wege wird gleichfalls eine gezielte Einstellung des Radialspiels zwischen Schwimmsattel 5 und Bremshalter 42 erreicht.

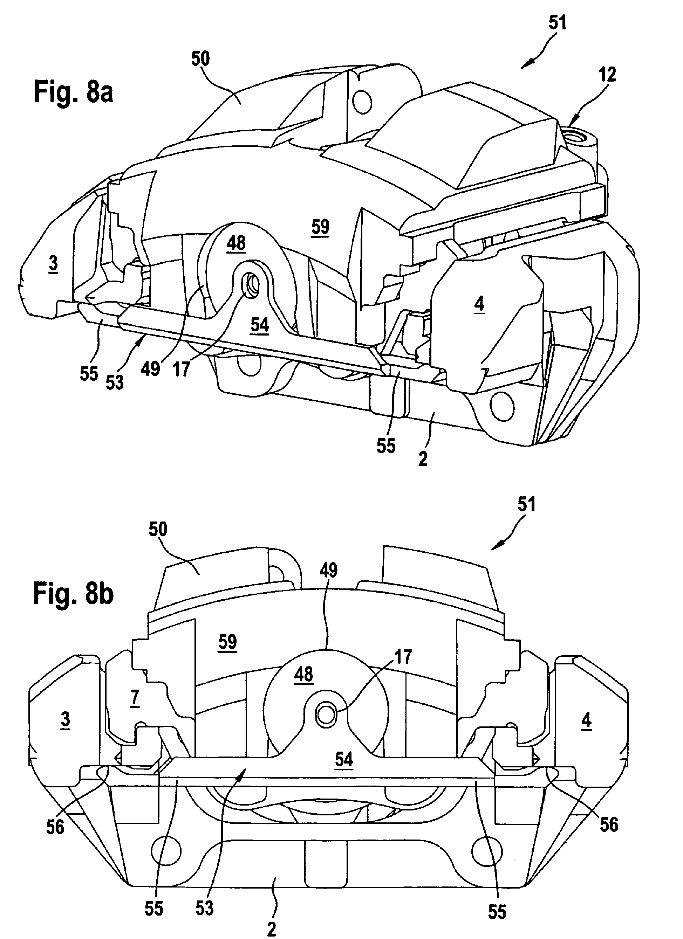

Der Figur 8 ist in zwei Ansichten eine weitere Ausführung eines Verriegelungselementes 53 zur radialen Spieleinstellung zwischen Schwimmsattel 50 und Bremshalter 2 zu entnehmen. Die in Figur 8 gezeigte Ausführung der Schwimmsattel-Scheibenbremse 51 umfasst einen verschiebbar am fahrzeugfesten Bremshalter 2 angeordneten Schwimmsattel 50, der allerdings nur eine einzige Betätigungsvorrichtung 12 zum Aufbringen einer Bremsenzuspannkraft aufweist. Zur radial einstellbaren sowie lösbaren Befestigung des Verriegelungselementes 53 am Schwimmsattel 50 ist ein Träger 48 mit dem Schwimmsattel 5 verbunden. Der Träger 48 ist beispielsweise als einfache Scheibe gestaltet, die in einer zugehörigen Öffnung 49 im außenliegenden Schwimmsattelschenkel 59 insbesondere formschlüssig befestigt ist. Vorzugsweise ist der Träger 48 in die konzentrische Öffnung 49 eingepresst, wobei die Öffnung 49 den Träger 48 über einen Winkel von mehr als 180° umschließt. Auf diesem Wege wird der Träger 48 in radialer Richtung sicher im Schwimmsattel 50 fixiert.

Das Verriegelungselement 53 kann über ein Langloch 17 im Basisabschnitt 54 in seiner radialen Position einstellbar am Träger 48 befestigt werden. Dazu wird bevorzugt eine Befestigungsschraube oder ein sonstiges nicht gezeigtes Befestigungselement verwendet, um das Verriegelungselement 53 lösbar mit dem Träger 48 zu verbinden. Durch die Zwischenschaltung des Trägers 48, um das Verriegelungselement 53 lösbar an den Schwimmsattel 50 anzubinden, wird die mechanische Bearbeitung des Schwimmsattels 50 vereinfacht.

Die radiale Verriegelung des Schwimmsattels 50 gegenüber dem Bremshalter 2 erfolgt über seitlich sich erstreckende Arme 55 des Verriegelungselementes 53, die analog zu den bereits erläuterten Ausführungsformen über jeweils eine Erhebung 56 verschiebbar an den Halterarmen 3, 4 anliegen. Insgesamt wird das Verriegelungselement 53 somit gleichsam zwischen dem Schwimmsattel 50 und dem fahrzeugfesten Bremshalter 2 wirksam. Lediglich die radial einstellbare Befestigung des Verriegelungselementes 53 am Schwimmsattel 50 erfolgt über einen zwischengeschalteten Träger 48. Demzufolge wird auch für diese Variante eine beliebige Einstellung des Radialspiels zwischen dem Bremshalter 2, den Bremsbelägen 6, 7 und dem Schwimmsattel 50 ermöglicht.

Selbstverständlich lässt sich die in Figur 8 dargestellte Befestigungsvariante für das Verriegelungselement 53 auch auf Bauformen der Schwimmsattel-Scheibenbremse übertragen, bei der mehrere Betätigungsvorrichtungen in den Schwimmsattel integriert sind. Solche Schwimmsattelausführungen beispielsweise mit jeweils zwei Betätigungsvorrichtungen sind in den Figuren 1-7 dargestellt. Zur radial einstellbaren Befestigung des entsprechenden Verriegelungselementes ist dann die Verwendung mehrerer, beispielsweise zweier, Träger im außenliegenden Schwimmsattelschenkel erforderlich. Das zugehörige Verriegelungselement könnte dann an jedem Träger radial einstellbar sowie lösbar befestigt werden.

## Patentansprüche

1. Schwimmsattel-Scheibenbremse (1, 41, 51) eines Kraftfahrzeugs mit einem fahrzeugfest angeordneten Bremshalter (2, 42), welcher eine Bremsscheibe übergreift, und an dem ein Schwimmsattel (5, 50) bezogen an die Bremsscheibenachse axial verschiebbar gelagert ist, wobei zur bezogen an die Bremsscheibenachse radialen Fixierung des Schwimmsattels (5, 50) am Bremshalter (2, 3, 4, 40, 42) auf einer Fahrzeug zugewandten Seite der Bremsscheibe mindestens eine Bolzenführung (8) vorgesehen ist, und auf einer Fahrzeug abgewandten Seite der Bremsscheibe ein Verriegelungselement (13, 23, 33, 34, 43, 53) wirksam ist, welches lösbar am Schwimmsattel (5, 50) befestigt ist und mit einem Abschnitt (15, 20, 25, 30, 45, 55) axial verschiebbar am Bremshalter (2, 3, 4, 40, 42) angeordnet ist, **dadurch gekennzeichnet, dass** das Verriegelungselement (13, 23, 33, 34, 43, 53) in seiner radialen Position einstellbar am Schwimmsattel (5, 50) befestigt ist.

2. Schwimmsattel-Scheibenbremse (1, 41, 51) nach Anspruch 1, **dadurch gekennzeichnet, dass** der Schwimmsattel (5, 50) zumindest radial an einem zugehörigen Bremsbelag (6, 7) abgestützt ist, der seinerseits im Bremshalter (2, 42) axial verschiebbar geführt ist sowie radial anliegt.

3. Schwimmsattel-Scheibenbremse (1, 41, 51) nach einem der vorhergehenden Ansprüche, **dadurch gekennzeichnet, dass** das Verriegelungselement (13, 23, 33, 34, 43, 53) über zumindest ein radial sich erstreckendes Langloch (17) oder eine entsprechend bemessene Öffnung, in dem/der ein zugehöriger Bolzen (18) spielbehaftet angeordnet ist, am Schwimmsattel (5, 50) befestigt ist.

4. Schwimmsattel-Scheibenbremse (51) nach einem der vorhergehenden Ansprüche, **dadurch gekennzeichnet, dass** das Verriegelungselement (53) an einem fest mit dem Schwimmsattel (50) verbundenen Träger (48) lösbar befestigt ist.

5. Schwimmsattel-Scheibenbremse (1, 41) nach Anspruch 3, **dadurch gekennzeichnet, dass** der Bolzen (18) lösbar am Schwimmsattel (5) befestigt ist.

6. Schwimmsattel-Scheibenbremse (51) nach den Ansprüchen 3, 4 **dadurch gekennzeichnet, dass** der Bolzen (18) lösbar am Träger (48) befestigt ist.

7. Schwimmsattel-Scheibenbremse (1, 41, 51) nach einem der vorhergehenden Ansprüche, **dadurch gekennzeichnet, dass** der axial verschiebbar am Bremshalter (2, 3, 4, 40, 42) angeordnete Abschnitt (15, 20, 25, 30, 45, 55) des Verriegelungselementes (23, 33, 34, 43, 53) radial elastisch ausgebildet ist.

8. Schwimmsattel-Scheibenbremse (1, 41, 51) nach einem der vorhergehenden Ansprüche, **dadurch gekennzeichnet, dass** am Verriegelungselement (33, 34) zumindest ein elastischer Federarm (20, 30) ausgebildet ist, der mit Vorspannung in Umfangsrichtung, axial verschiebbar am Bremshalter (2, 3, 4) anliegt.

## Claims

1. Floating-caliper disc brake (1, 41, 51) of a motor vehicle including a brake holder (2, 42) firmly attached to the vehicle and straddling a brake disc, and on which a floating caliper (5, 50) is axially displaceably mounted with respect to the brake disc axis, wherein at least one pin guide (8) is provided on a side of the brake disc facing the vehicle for the radial fixation of the floating caliper (5, 50) on the brake holder (2, 42) with respect to the brake disc axis, and a locking element (13, 23, 33, 34, 43, 53) is active on a side of the brake disc remote from the vehicle, which is detachably secured to the floating caliper (5, 50) and, with a portion (15, 20, 25, 30, 45, 55), is axially displaceably arranged on the brake holder (2, 3, 4, 40, 42),
**characterized in that** the locking element (13, 23, 33, 34, 43, 53) is secured to the floating caliper (5, 50) so as to be adjustable in its radial position.

2. Floating-caliper disc brake (1, 41, 51) as claimed in claim 1,
**characterized in that** the floating caliper (5, 50) is supported at least radially on an associated brake pad (6, 7), which in turn is axially displaceably guided in and radially abutting on the brake holder (2, 42).

3. Floating-caliper disc brake (1, 41, 51) as claimed in any one of the preceding claims,
**characterized in that** the locking element (13, 23, 33, 34, 43, 53) is attached to the floating caliper (5, 50) by means of at least one radially extending elongated hole (17) or any other appropriately sized opening in which an associated pin (18) is arranged with a clearance.

4. Floating-caliper disc brake (51) as claimed in any one of the preceding claims,
**characterized in that** the locking element (53) is detachably fastened to a carrier (48) connected firmly to the floating caliper (50).

5. Floating-caliper disc brake (1, 41) as claimed in claim 3,
**characterized in that** the pin (18) is detachably secured to the floating caliper (5).

6. Floating-caliper disc brake (51) as claimed in claims 3, 4,
**characterized in that** the pin (18) is detachably secured to the carrier (48).

7. Floating-caliper disc brake (1, 41, 51) as claimed in any one of the preceding claims,
**characterized in that** the portion (15, 20, 25, 30, 45, 55) of the locking element (23, 33, 34, 43, 53) that is axially displaceably arranged on the brake holder (2, 3, 4, 40, 42) has a radially elastic design.

8. Floating-caliper disc brake (1, 41, 51) as claimed in any one of the preceding claims,
**characterized in that** at least one elastic spring arm (20, 30) is provided at the locking element (33, 34) and bears against the brake holder (2, 3, 4) under preload in circumferential direction and in an axially displaceable manner.

## Revendications

1. Frein à disque à étrier flottant (1, 41, 51) d'un véhicule automobile comportant un porte-frein (2, 42) solidaire du véhicule qui passe sur un disque de frein et sur lequel est monté axialement coulissant, par rapport à l'axe du disque de frein, un étrier flottant (5, 50), au moins un guidage de boulon (8) étant prévu pour la fixation radiale par rapport à l'axe du disque de frein de l'étrier flottant (5, 50) sur le porte-frein (2, 3, 4, 40, 42), sur un côté du disque de frein tourné vers le véhicule, et sur un côté tourné à l'opposé du véhicule du disque de frein opérant un élément de verrouillage (13, 23, 33, 34, 43, 53) qui est fixé de manière séparable sur l'étrier flottant (5, 50) et est disposé de manière à pouvoir coulisser axialement sur le porte-frein (2, 3, 4, 40, 42) par un segment (15, 20, 25, 30, 45, 55), **caractérisé en ce que** l'élément de verrouillage (13, 23, 33, 34, 43, 53) est fixé de manière réglable dans sa position radiale sur l'étrier flottant (5, 50).

2. Frein à disque à étrier flottant (1, 41, 51) selon la revendication 1, **caractérisé en ce que** l'étrier flottant (5, 50) est soutenu au moins radialement sur une garniture de frein (6, 7) correspondante qui de son côté est guidée de manière à coulisser axialement dans le porte-frein (2, 42) et s'y applique radialement.

3. Frein à disque à étrier flottant (1, 41, 51) selon l'une des revendications précédentes, **caractérisé en ce que** l'élément de verrouillage (13, 23, 33, 34, 43, 53) est fixé sur l'étrier flottant (5, 50) par au moins un trou oblong (17) s'étendant radialement ou par une ouverture convenablement dimensionnée dans lequel/laquelle est disposé avec jeu un boulon (18) correspondant.

4. Frein à disque à étrier flottant (51) selon l'une des revendications précédentes, **caractérisé en ce que** l'élément de verrouillage (53) est fixé de manière séparable sur un support (48) relié de manière fixe à l'étrier flottant (50).

5. Frein à disque à étrier flottant (1, 41) selon la revendication 3, **caractérisé en ce que** le boulon (18) est fixé de manière séparable à l'étrier flottant (5).

6. Frein à disque à étrier flottant (51) selon les revendications 3, 4, **caractérisé en ce que** le boulon (18) est fixé de manière séparable au support (48).

7. Frein à disque à étrier flottant (1, 41, 51) selon l'une des revendications précédentes, **caractérisé en ce que** le segment (15, 20, 25, 30 45, 50), disposé à coulissement axial sur le porte-frein (2, 3, 4, 40, 42), de l'élément de verrouillage (23, 33, 34, 43, 53), est réalisé radialement élastique.

8. Frein à disque à étrier flottant (1, 41, 51) selon l'une des revendications précédentes, **caractérisé en ce que** sur l'élément de verrouillage (33, 34) est réalisé au moins un bras de ressort élastique (20, 30) qui s'applique contre le porte-frein (2, 3, 4) avec précontrainte dans la direction périphérique et de manière à pouvoir coulisser axialement.
